# EUROPÄISCHE PATENTSCHRIFT

(11) **EP 1 021 267 B1**
(45) Veröffentlichungstag und Bekanntmachung des Hinweises auf die Patenterteilung: **17.07.2002**
(21) Anmeldenummer: 98910898.0
(22) Anmeldetag: 13.03.1998
(51) Int. Cl.: B23B 31/16, B23B 31/14

(54) **SPANNFUTTER MIT AUTOMATISCHER VERSTELLUNG DER BACKEN UND AUSGLEICH DER ZENTRIFUGALKRAFT**
CHUCK WITH AUTOMATICALLY ADJUSTED JAWS AND COMPENSATION OF CENTRIFUGAL FORCE
MANDRIN A REGLAGE AUTOMATIQUE DES MACHOIRES ET COMPENSATION DE LA FORCE CENTRIFUGE

(30) Priorität: 10.10.1997 HU 0100629
(43) Veröffentlichungstag der Anmeldung: 26.07.2000
(73) Patentinhaber: Tajnafoi, Jozsef, 3508 Miskolc (HU); Gaal, Jozsef, 6000 Kecskemét (HU); Kertész, Jozsef, 6000 Kecskemét (HU)
(72) Erfinder: Tajnafoi, Jozsef, 3508 Miskolc (HU); Gaal, Jozsef, 6000 Kecskemét (HU); Kertész, Jozsef, 6000 Kecskemét (HU)
(74) Vertreter: Viering, Jentschura & Partner
(86) Internationale Anmeldenummer: HU9800025
(87) Internationale Veröffentlichungsnummer: WO9919103

(56) Entgegenhaltungen:
- EP-A- 0 124 697
- DE-A- 3 219 295
- DE-A- 3 434 308
- DE-C- 882 790
- GB-A- 322 991
- US-A- 2 982 558
- US-A- 3 610 645
- US-A- 3 938 815

## Beschreibung

Die Erfindung betrifft ein Spannfutter mit im Futtergehäuse geführten Spannbacken, denen über Zahnstangenverzahnungen direkt oder indirekt verkuppelbare bzw, entkuppelbare innere Backen zugeordnet sind, denen mit Zahnstangenverzahnungen versehene, axial und radial geführte Kupplungskörper angeschlossen sind, außerdem die inneren Backen über einen Keilmechanismus mit einem zentralen Ziehkopf verbunden sind, der über eine in einer zentralen Bohrung der Hauptspindel geführten Stange oder Hohlwelle mit dem Kolben eines am hinteren Teil der Hauptspindel angeordneten hydraulischen Zylinders verbunden ist, wobei der sich an den zentralen Ziehkopf anschließende Keilmechanismus so ausgebildet ist, daß im zentralen Ziehkopf drei Keilelemente befestigt oder angeordnet sind, außerdem das Spannfutter die Zentrifugalkraft ausgleichende Massen aufweist.

Ein derartiges Spannfutter ist z.B. aus US-A-3 610 645 bekannt.

Spannfutter mit hoher Spannkraft wurden in erster Linie für die Serien- und Massenfertigung entwickelt. Für ihren keilartigen oder hebelartigen Grundmechanismus ist es kennzeichnend, daß die Backen nur in einem begrenzten Maßbereich bewegt werden können, deshalb müssen die Spannbacken bei Werkstücken mit variablem Durchmesser oft verstellt oder ausgewechselt werden. Während dieser Verstellungen und Austauschvorgänge sind die Betriebssicherheit und die Unfallfreiheit sehr wichtige Faktoren.

Ein anderes grundsätzliches Problem ist der Ausgleich der auf die Backen einwirkenden Zentrifugalkraft, da bei einer Erhöhung der Umdrehungszahl der Hauptspindel die Spannkraft der Backen infolge der Zentrifugalkraft sehr schnell abnimmt.

Die Ansprüche an eine hohe Spannkraft erfordern auch eine stetige Entwicklung des Grundmechanismus zur Erzeugung der Spannkraft.

Die neuesten Varianten der bekannten Konstruktionen von Spannfuttern können in Gruppen in bezug auf die oben erwähnten Probleme eingeteilt werden.

Die am meisten verbreiteten Methoden zur Einstellung der Spannbacken auf einen anderen Durchmesserbereich erfordern Handarbeit, also den Eingriff des Menschen. So sind z. B. die manuellen Austauschmethoden solcher Backen, die mit einer Zahnstangenverzahnung versehen und mit Schrauben befestigt sind.

Für die in der DE 12 88 872 erläuterte Erfindung der Firma Forkardt ist eine mit der Hand verstellbare Verbindung kennzeichnend (siehe noch Werkstatt und Betrieb 106, 173/11-895).

Verschiedene Lösungen zum schnellen Austausch der Backen und zu schnellen Backenverstellungen mit der Hand werden in der EP-A 0 166 887, DE 34 34 308 A, DE 882 790 C und GB 322 991 A (angemeldet von Paul Forkardt) sowie in der EP-A 0 318 360 (Gamet Precision) und in der DE 32 19 295 A (Autoblok) vorgeschlagen.

Eine Lösung der Automatisierung bei der Entwicklung der Spannfutter stellt der automatische Austausch der Backen durch Roboter dar. Eine dafür geeignete Backenkonstruktion wird in der EP-A 0 204 095 der Firma SMW Schneider Weisshaupt GmbH beschrieben. Zur Anwendung dieser Lösung werden große und teuere Spannbackenlager und Roboter benötigt.

Mit der automatischen Verstellung der Backen beschäftigen sich auch die am 29.08.1986 eingereichte ungarische Patentanmeldung mit der Nummer 2737/86 und die am 23. 03. 1990 eingereichte ungarische Patentanmeldung mit der Nummer 1799/90. Bei diesen wurde jedoch der Ausgleich der Zentrifugalkraft nicht gelöst, und diese Erfindungen wurden auch nicht veröffentlicht.

Die durch die Firma Röhm eingereichte DE 37 26 773 bzw. die danach eingereichte EP 0 303 002 beschäftigen sich ebenfalls mit der automatischen Verstellung der Backen. Der automatische Ausgleich der Zentrifugalkraft ist bei diesen Lösungen ebenfalls nicht gelöst. Der Verstellmechanismus der vorgeschlagenen Spannfutter wird durch einen in das Futtergehäuse eingebauten hydraulischen Kolben betätigt, wobei zur Einführung des Druckmittels eine besondere Lösung für die Hauptspindel benötigt wird.

Ein Beispiel für den Ausgleich der Zentrifugalkraft zeigt die EP 0 349 742 (Paul Forkardt). Dabei sind die vorderen Backen durch einen zweiarmigen Hebel mit den hinteren Backen verbunden, was im Futtergehäuse einen großen Durchbruch voraussetzt.

Eine andere Lösung zum Ausgleich der Zentrifugalkraft wurde in der EP 0 318 360 (Gamet Precision) bzw. in der als deren Vorgänger eingereichten FR 87 16 243 dargelegt. Diese Schriften beschäftigen sich jedoch überhaupt nicht mit der automatischen Backenverstellung, weiterhin besteht eine linienartige Verbindung zwischen dem Hebelarm und den Spannbacken dieser Spannfutterkonstruktion, was ungünstig auf die Lebensdauer auswirkt.

Ebenfalls eine Lösung zum Ausgleich der Zentrifugalkraft wird in der US 3 610 645 beschrieben. Es geht hier aber lediglich um eine manuell betätigbare Spannvorrichtung, die weder die maschinelle Betätigung noch die Selbstzentrierung lösen kann. Weiterhin sind bei dieser Spannvorrichtung die hinsichtlich des Einbaus von anderen Bauteilen wichtigen Massenverteilungen auch nicht gerade optimal gelöst.

Weitere Lösungen zum Ausgleich der Zentrifugalkraft sind aus den US 2 982 558 und EP 0 124 697 erkennbar.

Lösungen zur Entwicklung eines keilartig funktionierenden Grundmechanismus werden in den durch Paul Forkardt eingereichten EP 0 215 350 bzw. EP 0 212 198 beschrieben, bei denen die Bewegung der Grundbacken durch an den Seiten der Backen ausgebildete Keile geschieht, weiterhin in der von der Firma Pratt Burnard International Limited angemeldeten EP 0 213 815, bei der im Inneren eines hydraulischen Kolbens schräge zylinderförmige Körper eingebaut sind, die mittels je eines Zapfens die Grundbacken bewegen.

Eine ähnliche Lösung mit Zapfen und Rundkeilen enthält die US 3 610 645. Die Keile sind hier aber auch nahe zu den Spannbacken, im Vergleich zur Drehachse an der selben Seite angeordnet, so daß diese Lösung wegen Platzprobleme weder hinsichtlich der Festigkeit noch der Flächenbelastung keinen echten Fortschritt im Vergleich zu den anderen bekannten Lösungen bedeutet.

Die durch die Erfindung zu lösende Aufgabe besteht in der Behebung der Nachteile der bekannten Spannfutterkonstruktionen und in der Schaffung einer solchen Spannfutterkonstruktion, bei der die automatische Verstellung der Spannbacken auf einen anderen Durchmesserbereich wirtschaftlich und zuverlässig gelöst wird, wobei diese Spannfutterkonstruktion die entkoppelung der Spannbacken während ihrer schnellen Rotation und das Starten der Hauptspindel im entkoppelten Zustand der Spannbacken mit großer Sicherheit verhindert, wobei bei einigen Ausführungsformen auch ein Fortschritt auf dem Gebiet des Ausgleichs der Zentrifugalkraft und der Gestaltung von Keilmechanismen mit großer Belastbarkeit erzielt wird.

Ausgehend von einem in der Einführung dargelegten Spannfutter wird die gestellte Autgabe erfindungsgemäß dadurch gelöst, daß die Kupplungskörper der inneren Backen mit einer doppelten Verriegelungskonstruktion versehen sind, wobei das eine Element der doppelten Verriegelungskonstruktion der Kupplungskörper ein auf der äußeren oder inneren Fläche des Futtergehäuses verdrehbar geführter Steuerring ist, auf dem Steuerelemente in der Form von Steuerrollen oder von Steuerkeile und Stützflächen aufweisenden Steuerkörpem zur Verhinderung oder Herstellung einer Verbindung mit den Spannbacken angebracht sind, während das andere Element ein Verriegelungsmittel zur Verhinderung der Verdrehung des Steuerringes gegenüber dem Futtergehäuse ist, der zwischen dem Steuerring und dem Futtergehäuse bzw. dem Steuerring und mit dem Futtergehäuse fest verbundenen Verriegelungsflächen angeordnet ist.

Die obige erfindungsgemäße Lösung ist wirtschaftlich, weil die zur Durchführung der Backenverstellung solche Konstruktionsteile bzw. Bewegungskomponenten verwendet werden, die bei einer Werkzeugmaschine sowieso vorhanden sind. So wird z.B. die zum Spannen benutzte radiale Bewegungskomponente als eine Bewegungskomponente der Backenverstellung verwendet, während die andere Bewegungskomponente durch die am Steuerring angeordneten Steuerelemente durchgeführt werden. Die sichere Backenverstellung wird durch die doppelte Verriegelungskonstruktion dadurch gelöst, daß die Stützflächen am Steuerring die Entkuppelung der Kupplungskörper während der Rotation der Hauptspindel verhindern, während eine unerwünschte Verdrehung des Steuerringes durch ein Verriegelungsmittel zwischen dem Steuerring und dem Futtergehäuse verhindert wird. in der einen Grundstellung des Steuerringes.

Bei dem einen Grundtyp der Spannfutter ist es vorteilhaft, wenn die inneren Backen mit den die Zentrifugalkraft ausgleichenden Massen zusammengebaut sind, wobei diese die auf die inneren Backen und die Spannbacken einwirkende Zentrifugalkraft ausgleichenden Massen aus einem Stück mit den inneren Backen gebildet sind, darüber hinaus weisen die inneren Backen an ihren zwei entgegengesetzten Seiten bezüglich der Drehachse des Spannfutters zwei Kopfteile auf, von denen der schmälere Kopfteil entweder als ein mit der Zahnstangenverzahnung (3) direkt versehener Kupplungskörper ausgebildet ist, oder in seinem Inneren ein mit einer Zahnstangenverzahnung versehener Kupplungskörper axial geführt ist, während im an der entgegengesetzten Seite liegenden, eine ausgleichende Masse bildenden Kopfteil eine mit der Drehachse einen Winkel einschließende Bohrung für je ein Keilelement des Keilmechanismus ausgebildet ist.

Bei dieser Ausführungsform ist es weiterhin vorteilhaft, wenn in den Bohrungen des breiteren Kopfteiles der inneren Backen mit der Drehachse einen Winkel einschließende Zapfen zylinderförmigen Querschnitts als Keilelemente des Keilmechanismus geführt sind, wobei das Ende der Zapfen am zentralen Ziehkopf befestigt ist, während die Zapfen an ihrem anderen Ende mit ihnen einen Körper bildende, aber mit der Drehachse parallele Zapfenteile aufweisen, die in Buchsen geführt sind, die in die an den den Spannbacken gegenüberliegenden Seiten des Futtergehäuses ausgebildeten Bohrungen eingebaut sind.

Bei einem anderen Typ der Spannfutter, dem sogenannten "durchgängigen" Typ, ist es wiederum vorteilhaft, wenn die axial und radial geführten Kupplungskörper der inneren Backen zwei koaxiale Zylinderflächen mit unterschiedlichem Durchmesser besitzen, wobei die Zylinderfläche mit dem größeren Durchmesser in der Bohrung des vorderen breiten Teiles der inneren Backen, während die Zylinderfläche mit dem kleineren Durchmesser in der Bohrung des hinteren schmäleren Teiles der inneren Backen geführt ist, außerdem die die Zentrifugalkraft ausgleichenden Massen über einen Hebel mit den an den Seiten der inneren Backen ausgebildeten Nuten verbunden sind, wobei die Drehachsen der Hebel parallel zur Drehachse der Hauptspindel liegen.

Erfindungsgemäß ist es weiterhin vorteilhaft, wenn das Verriegelungsmittel zwischen dem Steuerring und dem Futtergehäuse aus einem im Steuerring axial geführten Verriegelungsstift besteht, dessen hinterer Stiftteil in entriegeltem Zustand des Futtergehäuses und des Steuerringes zwischen an dem Werkzeugmaschinengerüst fest angebrachten Verriegelungsflächen angeordnet ist. Ebenfalls von Vorteil ist es bei dieser Ausführungsform, wenn die Mantelfläche des Steuerringes mit einer Bohrung versehen ist, in die der eine Stift eines handbetätigten Spannfutterschlüssels eingesteckt werden kann, während der andere Stift des Spannfutterschlüssels mit einem zur axialen Bewegung geeigneten Oberflächenteil des Verriegelungsstiftes in Verbindung steht.

Zweckmäßig bei der oben angeführten Ausführungsform im Sinne der Erfindung ist eine Variante, bei der der Steuerring radial in die Ausschnitte des Futtergehäuses eingreifende Segmente aufweist, die zwischen der inneren Stirnfläche der Ausschnitte des Futtergehäuses und der Stirnfläche einer Aufnahmescheibe verdrehbar eingesetzt sind und auf diese Segmente Steuerrollen, Steuerkeile oder Stützriegel befestigt sind, die zwischen die Aufnahmescheibe und die axial geführten Kupplungskörper hineingreifen.

Eine andere vorteilhafte Ausführungsform im Sinne der Erfindung ist ein Spannfutter, bei dem das eine Element der doppelten Verriegelungskonstruktion aus an einem relativ zum Futtergehäuse verdrehbar geführten Steuerring ausgebildeten Steuerflächen und Steuerkörpern besteht, die durch Übertragungselemente oder direkt mit den axial geführten Kupplungskörpem in Verbindung stehen, während das andere Element ein auf dem hinteren Teil der Hauptspindel angebrachter Verdrehmechanismus ist, der aus einem mit dem Steuerring über eine einem in der Bohrung der Hauptspindel geführten Hohlwelle verbundenen Drehstern besteht, dessen Flügel in den Durchbrüchen des zwischen der Hauptspindel und dem hydraulischen Hauptzylinder angeordneten Zwischenstückes geführt sind, wobei an den Enden seiner Flügel Rollen angebracht sind, die in die zur Drehachse eines Ringes parallelen Kurvenbahnabschnitte eingreifen, wobei diese Kurvenbahnabschnitte sich in spiralförmigen Kurvenbahnen fortsetzen, außerdem an dem Zwischenstück weitere Rollen angebracht sind, die in die parallel zur Drehachse liegenden Kurvenbahnen des Ringes eingreifen, außerdem in eine zur Drehachse senkrechten Nut des Ringes eine Schubgabel ein greift, die mit dem Kolben eines hydraulischen Hilfszylinders verbunden ist.

Vorteilhaft ist weiterhin im Sinne der Erfindung eine solche Variante, bei der in die Bohrung der Hauptspindel nur ein einziges zentrales Ziehrohr eingebaut ist, auf dessen äußeren Flächen sowohl vom als auch hinten zur Momentübertragung geeignete Flächenteile, z. B. Poligonflächen ausgebildet sind, welche Flächenteile teilweise mit dem im Futtergehäuse geführten Steuerring bzw. teilweise mit den momentübertragenden Flächenteilen des hinteren Drehsterns in Verbindung stehen, weiterhin sind an den vorderen und hinteren Stirnflächen dieses zentralen Ziehrohres solche Flansche ausgebildet, die mit dem zentralen Ziehkopf und der Kolbenstange des hinteren hydraulischen Hauptzylinders verdrehbar zusammengebaut sind. Bei dieser Variante ist es zweckmäßig, wenn das zweite Element der doppelten Verriegelungskonstruktion ein Hebel ist, der durch ein Gelenk mit dem Drehstern verbunden ist, der sich im hinteren Teil der Hauptspindel befindet und in bezug auf das zentrale Ziehrohr gegen Verdrehung gesichert ist, wobei die Flächenteile des Hebels in der einen Schaltstellung mit der Hauptspindel, in der anderen Schaltstellung jedoch mit feststehenden Verriegelungsflächen in Verbindung stehen. Weiterhin ist es zweckmäßig bei dieser Ausführungsvariante, wenn die aus der Stirnfläche des Steuerringes herausragenden Oberflächenteile, z.B. die Flächenteile der Anschlagstifte, bei Normalbetrieb des Spannfutters in die Ausschnitte des zentralen Ziehkopfes eingreifen, jedoch bei den beiden verdrehten Stellungen des Steuerringes (bei der Betriebsart der Backenverstellung), diese Flächenteile bei der Rückwärtsbewegung des zentralen Ziehkopfes auf die Stirnfläche des zentralen Ziehkopfes aufschlagen.

Mit der erfindungsgemäßen Konstruktion kann die automatische Backenverstellung mittels einer an allen drei Spannbacken gleichzeitig vorgenommenen Vorschubbewegung verwirklicht werden. Die beiden Bewegungskomponenten dieser Vorschubbewegung - die radiale Bewegung der inneren Backen und die Entkupplung und Verkupplung der inneren Backen mit den Spannbacken - kann teilweise oder vollständig mit an der Werkzeugmaschine vorhandenen Bewegungen gelöst werden, dies erfordert jedoch eine außerordentlich hohe Sicherheit bei den Spannfuttern mit hoher Umdrehungszahl. Hierfür schlägt die Erfindung ein doppeltes Verriegelungssystem vor. Zum Ausgleich der auf die Spannbacken einwirkenden Zentrifugalkraft empfiehlt es sich auf Grund der einen Lösung, daß ein Teil der inneren Backen in die entgegengesetzte Seite zu den Spannbacken hineingreift, deren Teile mit größeren Massen ausgebildet sind. Die neuen Keile mit kreisförmigen Querschnitt des Spannmechanismus liegen auch auf der zu den Spannbacken entgegengesetzten Seite. Bei Spannfuttern der durchgängigen Ausführungsform besitzt die Kupplungskonstruktion zwei zylinderförmige Zapfen mit unterschiedlichem Durchmesser.

Die Erfindung wird ausführlicher anhand von Ausführungsbeispielen, unter Bezugnahme auf die beigefügte Zeichnung erläutert. In der Zeichnung zeigen
- Fig. 1: einen Längsschnitt einer möglichen Ausführungsform des erfindungsgemäßen Spannfutters,
- Fig. 2: einen Querschnitt entlang der Linie II-II der in Fig. 1 gezeigten erfindungsgemäßen Spannfutters,
- Fig. 3: einen Teilschnitt entlang der Linie III-III gemäß Fig. 2,
- Fig. 4: einen Teilschnitt entlang der Linie IV-IV gemäß Fig. 1,
- Fig. 5: einen Längsschnitt einer möglichen Ausführungsform des hinteren bewegbaren Konstruktionsteiles des erfindungsgemäßen Spannfutters,
- Fig. 6: einen Teil des ausgebreiteten Mantels des in Fig. 5 gezeigten Ringes mit Kurvenbahn,
- Fig. 7: einen Längsschnitt einer weiteren möglichen Ausführungsform des erfindungsgemäßen Spannfutters,
- Fig. 7a: einen vergrößerten Teil des linken oberen Teils der Fig. 7,
- Fig. 8: einen Querschnitt entlang der Linie VIII-VIII gemäß Fig. 7,
- Fig. 9: einen entlang eines Bogens IX-IX aufgenommenen Schnitt, gemäß Fig. 8,
- Fig. 10: einen Längsschnitt einer weiteren möglichen Ausführungsform des erfindungsgemäßen Spannfutters,
- Fig. 11: einen Schnitt entlang der Linie XI-XI gemäß Fig 10,
- Fig. 12: einen Teilschnitt entlang der Linie XII-XII gemäß Fig. 10,
- Fig. 13: einen Längsschnitt einer weiteren möglichen Ausführungsform des erfindungsgemäßen Spannfutters,
- Fig. 13a: eine vergrößerte Schnittdarstellung der Verriegelungskonstruktion der Ausführungsform gemäß Fig. 13,
- Fig. 14: einen Querschnitt entlang der Linie XIV-XIV gemäß Fig. 13,
- Fig. 15: einen Teilschnitt entlang der Linie XV-XV gemäß Fig. 13,
- Fig. 16: einen Längsschnitt einer weiteren möglichen Ausführungsform des erfindungsgemäßen Spannfutters,
- Fig. 17: einen Teilquerschnitt entlang der Linie XVII-XVII gemäß Fig. 16,
- Fig. 18: einen Teilquerschnitt entlang der Linie XVIII-XVIII gemäß Fig. 16,
- Fig. 19: einen Teilschnitt entlang der Linie XIX-XIX gemäß Fig. 16,
- Fig. 20: einen Teil der Draufsicht gemäß Fig. 18,
- Fig. 21: einen Längsschnitt einer weiteren möglichen Ausführungsform des erfindungsgemäßen Spannfutters,
- Fig. 22: einen Teilquerschnitt entlang der Linie XXII-XXII gemäß Fig. 21,
- Fig. 23: einen Teilquerschnitt entlang der Linie XXIII-XXIII gemäß Fig. 21,
- Fig. 24: einen Teillängsschnitt mit der Gestaltung und den Verbindungen des Zieh- und Drehrohres in Fig. 21 im hinteren Teil der Hauptspindel, und
- Fig. 25: einen skizzenhaften Längsschnitt einer weiteren möglichen Ausführungsform der Gestaltung des Zieh- und Drehrohres in Fig. 21 im hinteren Teil der Hauptspindel.

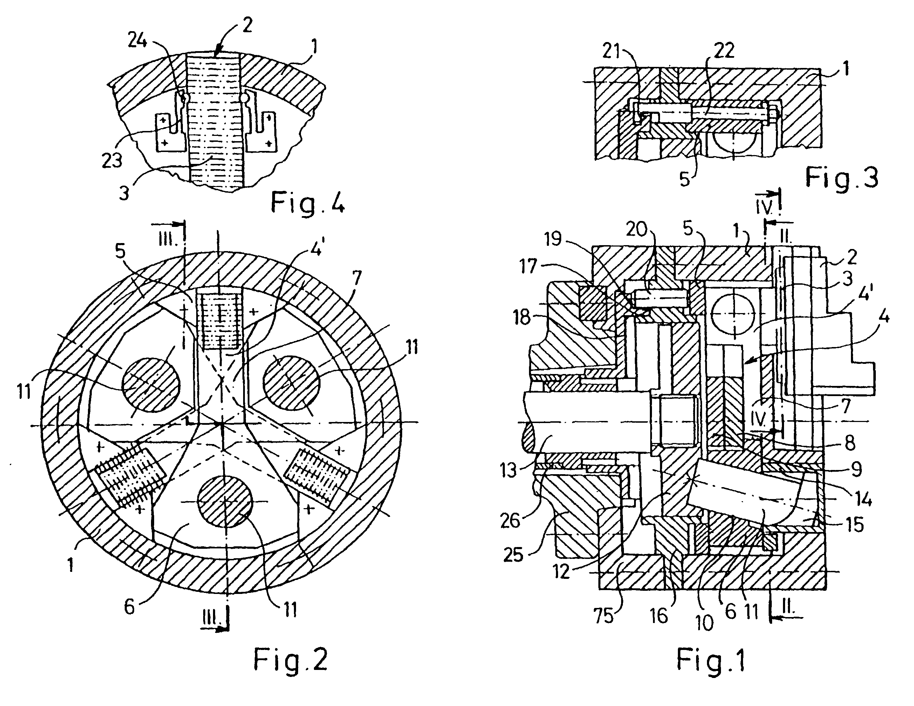

Die in den Figuren 1 bis 4 als Beispiel vorgestellte mögliche Ausführungsform ist ein maschinell festziehbares Spannfutter, d.h. ein sogenanntes Kraftspannfutter, das in einem Futtergehäuse 1 geführte Spannbacken 2 aufweist. Die Spannbacken 2 sind mittels einer Zahnstangenverzahnung 3 mit dem verzahnten Kopfteil 4' von inneren Backen 4 verbunden. Die inneren Backen 4 sind in einem axial bewegbaren Ring 5 im Futtergehäuse 1 radial geführt. Zu dieser radialen Führung wird der gesamte Durchmesser des Ringes 5 ausgenutzt und zwar in der Weise, daß die führenden Teile an den entgegengesetzten Seiten des Ringes 5 ausgebildet sind. Die inneren Backen 4 weisen an den in bezug auf die Achse des Spannfutters entgegengesetzten Seiten zwei Kopfteile auf. Der breitere Kopfteil 6, der sich auf der entgegengesetzten Seite zum schmäleren, auch mit einer gewichtsvermindernden Bohrung versehenen Kopfteil 4' befindet, bildet die Masse zum Ausgleich der Zentrifugalkraft. Die entsprechenden Kopfteile 4', 6 der drei inneren Backen 4 sind gleichartig, aber die die Kopfteile verbindenden Brücken 7, 8, 9 sind axial zueinander verschoben. Dadurch wird bei den inneren Backen 4 die ausgleichende Masse mit dem verzahnten Kopfteil in einem Körper vereinigt. Die Maße der ausgleichenden Massen sind so bemessen, daß sie nicht nur die auf den Kopfteil 4' der inneren Backen 4 einwirkende Zentrifugalkraft ausgleichen, sondern auch einen größeren Teil der auf die Spannbacken 2 einwirkenden Zentrifugalkraft. In dem breiteren Kopfteil 6 der inneren Backen 4 sind zylindrische Bohrungen 10 vorgesehen, die in einem Winkel zur Achse des Spannfutters angeordnet sind, in welche Zapfen 11 eingreifen, die einen zylinderförmigen Querschnitt besitzen. Die drei Zapfen 11 schließen mit der Achse des Spannfutters einen den Bohrungen 10 entsprechenden Winkel ein und sind mit einer Teilung von 120° in einem zentralen Ziehkopf 12 befestigt. Der zentrale Ziehkopf 12 wird in an sich bekannter Weise mittels in Bohrungen der Hauptspindel eingebauten Stangen oder Hohlwellen 13 bewegt. Die auf die Spannfutterstirnseite gerichteten Enden der Zapfen 11 sind unmittelbar gegenüber den Spannbacken 2 in Buchsen 14 geführt, die in im Futtergehäuse 1 ausgebildeten Bohrungen befestigt sind. Zu diesem Zweck haben die Zapfen 11 auch zylindrische Zapfenteile 15, deren Achse parallel zur Achse des Spannfutters liegt. Die Zapfen 11 bilden mit den vorher beschriebenen, sich an sie anschließenden Elementen einen speziellen Keilmechanismus, bei dem der axialen Bewegung des zentralen Ziehkopfes 12 eine gemeinsame radiale Bewegung der inneren Backen 4 zugeordnet ist. Der zentrale Ziehkopf 12 ist in einem Ring 16 geführt, der am Futtergehäuse 1 befestigt ist. Auf der Fläche 17 des Ringes 16 ist auch ein Steuerring 18 verdrehbar geführt. Die Steuerfläche 19 des Steuerringes 18 schließt sich an die Stimseite eines Zapfens 20 an, der im Ring 16 geführt ist und seine andere Stirnseite an der hinteren Seite des Ringes 5 anliegt. Die Steuerfläche 21 des Steuerringes 18 steht, wie in Fig. 3 zu sehen ist, mit der Steuerfläche eines Zapfens 22, der im Ring 5 befestigt ist, in Verbindung. Der Steuerring 18 hat zwei Stellungen. In der einen Stellung schiebt die Steuerfläche 19 den Ring 5 mittels des Zapfens 20 nach vorn, und dadurch greifen die Zahnstangenverzahnungen 3 der Spannbacken 2 und der inneren Backen 4 ineinander. In der anderen verdrehten Stellung des Steuerringes 18 zieht seine Steuerfläche 21 mittels der Steuerfläche des Zapfens 22 den Ring 5 nach hinten, wodurch die Zahnstangenverzahnungen 3 der Spannbacken 2 und der inneren Backen 4 entkuppelt werden. Die Umstellung der im Futtergehäuse 1 geführten Spannbacken 2 auf einen anderen Durchmesserbereich erfolgt in mehreren Schritten, bei allen drei Spannbacken 2 gleichzeitig. Durch die Schrittserie werden die Spannbacken 2 entweder auf größere oder kleinere Durchmesser umgestellt.

Beide Arten der Verstellung werden durch die Kombination von zwei unabhängigen Bewegungen hervorgerufen. Diese beiden unabhängigen Bewegungen sind: die axiale Bewegung des zentralen Ziehkopfes 12 bzw. die axiale Bewegung des Ringes 5, die bei der erfindungsgemäßen Konstruktion durch Drehung des Steuerringes 18 ermöglicht werden

Die Schritte der Verstellung der Spannbacken 2 auf einen kleineren Durchmesser sind z. B. die folgenden:
I. Der zentrale Ziehkopf 12 wird zurückgezogen, das heißt, die verzahnten Kopfteile 4' der inneren Backen 4 gelangen auf einen kleineren Durchmesser.
II. Der Ring 5 wird zurückgezogen, das heißt, die Zahnstangenverzahnung 3 zwischen den Spannbacken 2 und den inneren Backen 4 wird entkuppelt.
III. Der zentrale Ziehkopf 12 wird nach vom geschoben, das heißt, alle drei inneren Backen 4 werden auf einen größeren Durchmesser geschoben.
IV. Der Ring 5 wird nach vom geschoben, das heißt, die Zahnstangenverzahnungen 3 der Spannbacken 2 und der inneren Backen 4 greifen ineinander.

Der oben beschriebene Zyklus der stufenweise Verstellung nach innen kann in beliebiger Zahl wiederholt werden. Damit jedoch alles richtig funktioniert, muß dafür gesorgt werden, daß sich die Spannbacken 2 in entkuppeltem Zustand der Zahnstangenverzahnung 3 nicht fortbewegen. Dies kann z. B. durch die in der Figur 4 gezeigten, aus Blattfedern bestehenden Positionierelemente 23 gesichert werden, die in der Stirnwand des Futtergehäuses 1 von innen befestigt sind, und unmittelbar die Zahnstangenverzahnungen der Spannbacken 2 von zwei Seiten mit Hilfe von Kugeln 24 positionieren, die entweder auf die Blattfedern gelötet oder geklebt sind. Eine andere Voraussetzung für eine richtige Verstellung ist, daß die inneren Backen 4 während des Zykluselementes III gerade um eine Teilung auf den größeren Durchmesser schalten. Dies wird durch die Begrenzung des Hubes des Kolbens erreicht, der den zentralen Ziehkopf 12 bewegt. Diese Begrenzung wird im Raum hinter der Hauptspindel durch solche Lösungen verwirklicht, die bei einer Programmsteuerung mit Anschlägen angewandt werden, wobei der Anschlag nicht nur ein mechanischer, sondern auch z. B. ein induktiver oder anderer Fühler sein kann, der die Bewegung abstellt.

Die Verstellung der Spannbacken 2 nach außen kann durch die Steuerung der vorher angegebenen Zykluselemente in einer anderer Reihenfolge verwirklicht werden. Die veränderte Reihenfolge: II., I., IV., III..

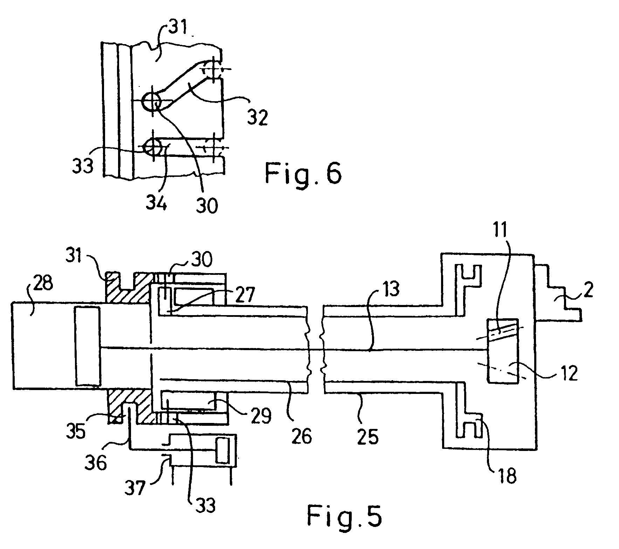

Die Figuren 5 und 6 zeigen eine Ausführungsform der Verdrehvorrichtung des Steuerringes 18. Durch eine in einer Bohrung der Hauptspindel 25 angeordnete Hohlwelle 26 erhält der Steuerring 18 eine Verbindung zu einem an dem hinteren Teil der Hauptspindel angeordneten Drehstern 27, dessen Flügel sich in den nahezu radialen Nuten eines Zwischenstückes 29, das sich zwischen der Hauptspindel 25 und einem hydraulischen Hauptzylinder 28 befindet, verdrehen können. Die an den Enden der Flügel des Drehsterns 27 befestigten Rollen 30 greifen in Kurvenbahnen 32 eines Ringes 31 ein, der auf dem Zwischenstück 29 und der Außenoberfläche des hydraulischen Hauptzylinders 28 geführt ist, während die Rollen 33, die am Zwischenstück 29 befestigt sind, in zur Drehachse des Ringes 31 parallelen Kurvenbahnen 34 geführt sind, außerdem ist die äußere Nut 35 des Ringes 31 über eine Schubgabel 36 mit einem hydraulischen Hilfszylinder 37 verbunden. Durch eine Bewegung des Kolbens des hydraulischen Hilfszylinders 37 nach links wird der Ring 31 verschoben, wodurch die Kurvenbahnen 32, 34 mittels der Rollen 30 und 33 den Drehstern 27 im Verhältnis zur Hauptspindel 25 bzw. dadurch den Steuerring 18 über die Hohlwelle 26 zu einer Verdrehung zwingen.

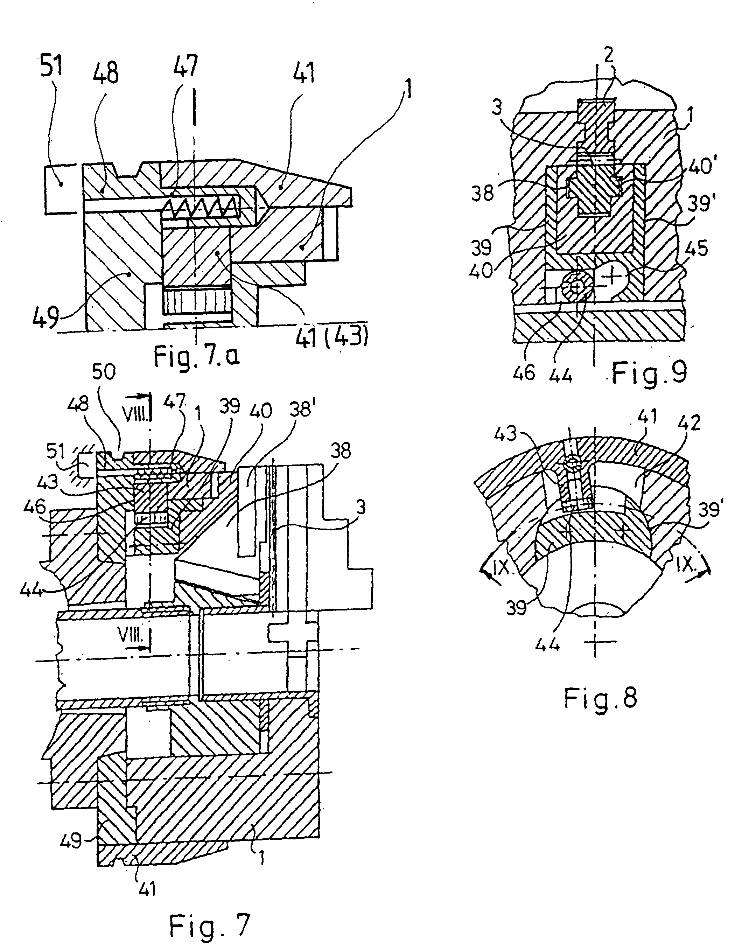

Eine weitere mögliche Ausführungsform des erfindungsgemäßen Spannfutters zeigen die Figuren 7, 7a, 8 und 9. Die im Futtergehäuse 1 axial geführten Körper, die die inneren Backen 38 tragen, bestehen aus zwei zusammengeschraubten Teilen 39, 40, wobei die zylindrische Führung 39' des Teiles 39 in eine axiale Bohrung des Futtergehäuses 1 axial beweglich eingepaßt ist, während das daran befestigte Teil 40 eine bis zum Außendurchmesser des Spannfutters verlängerte radiale Führung 40' aufweist, die an die radiale Führung 38' der inneren Backe 38 angeschlossen ist. Durch diese Lösung ist es möglich, in Spannfuttern mit Durchgangsbohrung, die radialen Führungen der inneren Backen 38 maximal zu verlängern.

Die Rolle des Steuerorgans übernimmt in Figuren 7 und 8 ein Steuerring 41. Die Segmente 43, die mit dem Steuerring 41 einen Körper bilden und in Ausschnitte 42 im Futtergehäuse 1 in radialer Richtung hineingreifen, werden axial zwischen den inneren Stirnflächen der Ausschnitte 42 des Futtergehäuses 1 und der Stirnfläche einer Aufnahmescheibe 49 geführt. An den Segmenten 43 sind Steuerrollen 44 befestigt, die in die Kurvenbahn 45 des Teiles 39 eingreifen. Der innere Teil des Segments 43 ist so ausgebildet, daß das Teil 39 neben den Steuerrollen 44 auch durch die flachen Oberflächenteile 46 des Segments 43 bei Normalbetrieb mit hoher Umdrehungszahl unterstützt wird.

In diesem Betriebszustand wird der Steuerring 41 durch einen zylindrischen Verriegelungsstift 47 mit dem Futtergehäuse 1 verriegelt. Der Verriegelungsstift 47 hat auch einen Stiftteil 48 mit einem größeren Durchmesser, bei dem der innere Teil so bearbeitet ist, daß die Verdrehung des Stiftteiles 48 am äußeren Umfang der Aufnahmescheibe 49 möglich ist. Der Aufbau dieser Verriegelungskonstruktion ist in Fig. 7a besonders übersichtlich dargestellt.

Die Zahnstangenverzahnung 3 der äußeren und inneren Backen kann während der Backenverstellung folgendermaßen entkuppelt werden: der Verriegelungsstift 47 wird durch eine Nut 50 der Aufnahmescheibe 49 nach links in eine am Spannfutter angegebene Stelle geschoben. Dadurch löst sich die Verriegelung des Verriegelungsstiftes 47 zwischen dem Futtergehäuse 1 und dem Steuerring 41, bzw. seinem Segment 43, es kommt damit gleichzeitig zu einer neuen Verriegelung zwischen dem Stiftteil 48 und den feststehenden Verriegelungsflächen 51, die am Gehäuse der Hauptspindel ausgebildet sind. Wird in diesem Zustand die Hauptspindel - durch einen "C"-Achsen-Antrieb, also durch eine langsame geregelte Drehung - gedreht, dann werden der Steuerring 41 und die Steuerrolle 44 gemeinsam stehenbleiben, die gesamte Futterkonstruktion verdreht sich jedoch mit dem axial nach hinten ziehbaren Teilstück und der sich darauf befindlichen Kurvenbahn 45 gemeinsam. Die relative Verschiebung der Kurvenbahn 45 und der Steuerrolle 44 bewirkt ein Zurückziehen der Teile 39, 40, gemeinsam mit der inneren Backe 38 und dadurch werden die Zahnstangenverzahnungen 3 entkuppelt. Die Verkupplung kann durch eine Verdrehung in umgekehrter Richtung durchgeführt werden. Bei Drehmaschinen, die eine "C"-Achse besitzen, kann die den hinteren Steuerringes über die Hauptspindel 25 verdrehende Konstruktion bei Anwendung der oben angegebenen Verriegelungskonstruktionen entfallen.

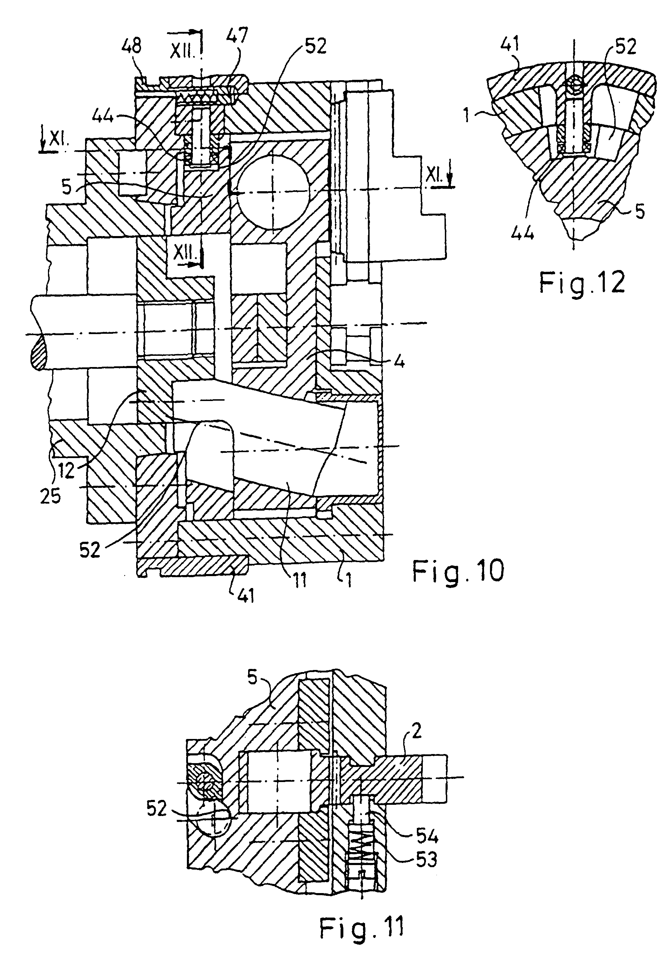

Eine weitere mögliche Ausführungsform des erfindungsgemäßen Spannfutters zeigen die Figuren 10, 11 und 12. Die Konstruktion der inneren Backen stimmt mit der Konstruktion der inneren Backen 4 , die anhand der Figuren 1 und 2 erläutert wurden, überein. Der zentrale Ziehkopf 12 ist in einer Bohrung der Hauptspindel 25 geführt. An dem zentralen Ziehkopf 12 sind mit axial angeordneten Schrauben Zapfen 11 mit Zylinderquerschnitt befestigt, die Teile des Keilmechanismus sind.

Der Steuerring 41 und der in ihn eingepaßte Verriegelungsstift 47 stimmt mit der in den Figuren 7 und 7a angegebenen Lösung überein. Die Steuerrollen 44 greifen in eine Kurvenbahn 52 des die inneren Backen tragenden Ringes 5 ein, wie dies auf den Figuren 11 und 12 besonders gut zu sehen ist. Bei dieser Lösung werden die Spannbacken 2 im entkuppelten Zustand der Zahnstangenverzahnungen 3 durch einen mit einer Feder 53 belasteten Stift 54 durch Reibung an ihrer Stelle gehalten, wie sich dies aus Figur 11 ergibt.

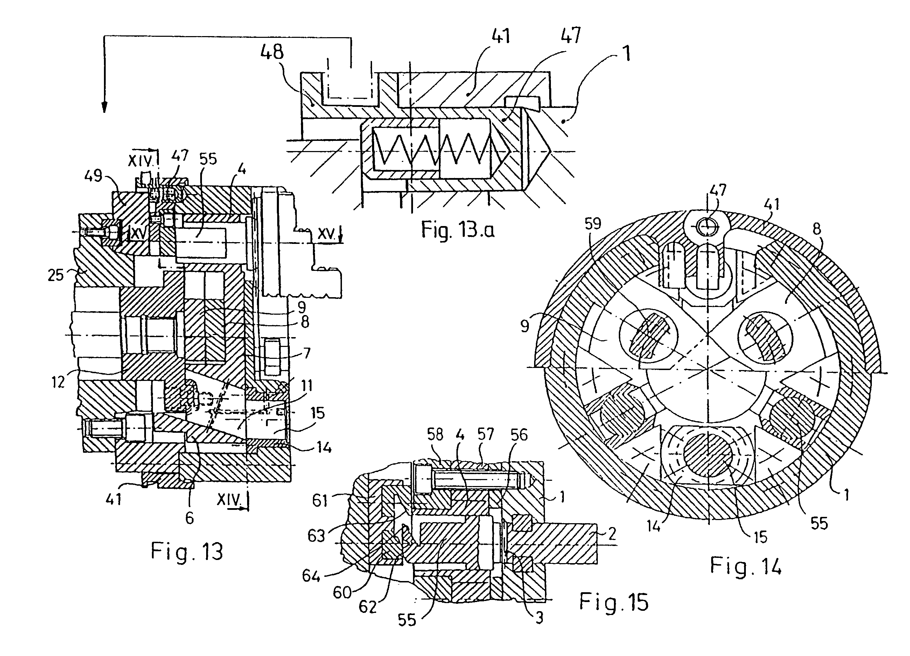

Eine weitere mögliche Ausführungsform des erfindungsgemäßen Spannfutters zeigen die Figuren 13, 14 und 15. Die Zahnstangenverzahnung 3 der Spannbacken 2 ist mit einer Zahnstangenverzahnung eines Kupplungskörpers 55 verbunden, wobei die Zylinderfläche des Kupplungskörpers 55 in einer axialen Bohrung der inneren Backen 4 geführt wird. Die inneren Backen 4 sind durch Führungselemente 56, 57 und 58 radial geführt, wobei diese Führungselemente an der inneren Stirnfläche des Futtergehäuses 1 mit Schrauben befestigt sind. Wie in Fig. 15 zu sehen ist, stimmt die Verriegelung des Steuerringes 41 mit dem Verriegelungsstift 47, bzw. seine Betriebsweise mit dem in Figur 7 und 7a Angegebenen überein.

Die Zapfen 11 mit zylindrischem Querschnitt sind über kreisförmige Segmente 59 mit dem zentralen Ziehkopf 12 verbunden. An die hinteren Keil-bzw. Unterstützungsflächen des Kupplungskörpers 55 schließen sich gehärtete Steuerkörper 60 und 61, die im Steuerring 41 befestigt sind, an. Ist der Kupplungskörper 55 in einer nach vorn geschobenen Stellung, so schließt sich der Kupplungskörper 55 mit seiner hinteren Fläche 62 an den Steuerkörper 60 an. Während der Verdrehung des Steuerringes 41 kommt die Keilfläche 63 des Steuerkörpers 61 mit der konischen Keilfläche 64 des Kupplungskörpers 55 in Verbindung, wodurch der Kupplungskörper 55 nach hinten gezogen wird.

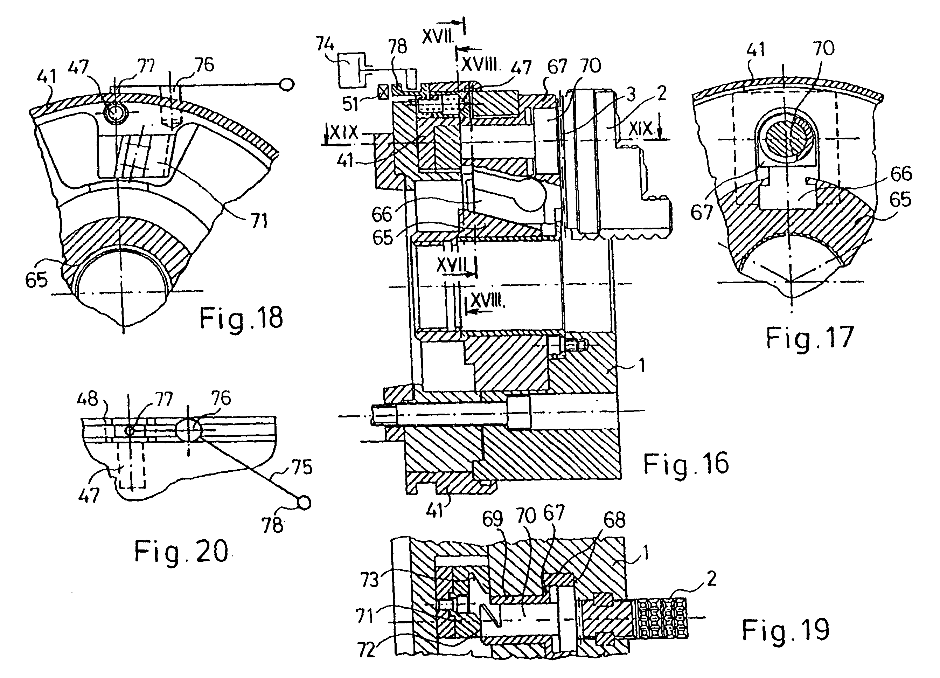

Eine weitere mögliche Ausführungsform des erfindungsgemäßen Spannfutters, der sogenannten durchgängigen Ausführung, zeigen die Figuren 16 - 20. Der keilartige zentrale Ziehkopf 65 schließt sich mit einem an sich bekannten Keilmechanismus 66 an die inneren Backen 67 an. Der vordere Teil 68 der inneren Backen 67 ist durch breite Führungen radial im Futtergehäuse 1 geführt, während ihr hinterer Teil 69 schmaler ist, und ihr oberer Teil zweckmäßigerweise halbzylindrisch ausgebildet ist. In diesen inneren Backen 67 sind in zwei koaxialen axialen Bohrungen 67', 67" mit unterschiedlichen Durchmessern Kupplungskörper 70 geführt, deren Zahnstangenverzahnung 3, die an den Stirnflächen ausgebildet ist, sich an die äußeren Spannbacken 2 anschließt. Die hintere Fläche der Kupplungskörper 70 liegt auf einer flachen Stirnfläche 72 eines im Steuerring 41 befestigten gehärteten Steuerkörpers 71 auf. Nach der Verdrehung des Steuerringes 41 wird die Keilfläche 73 des Steuerkörpers 71 mit der konischen Keilfläche des Kupplungskörpers 70 verbunden und zieht den Kupplungskörper 70 nach hinten.

Die relative Verdrehung des Steuerringes 41 im Verhältnis zum Futtergehäuse 1, wodurch die Entkupplung bzw. Verkupplung der Zahnstangenverzahnung 3 verwirklicht wird, läßt sich sowohl automatisch als auch mit Hand durchführen. Der automatische Betrieb ist ähnlich, wie bei der in den Figuren 7 und 7a dargelegten Lösung: In einer fest positionierten Stellung des Futtergehäuses zieht ein am Kolben eines kleinen hydraulischen Servozylinders 74 befestigter Ansatz den Verriegelungsstift 47 zwischen die feststehenden Verriegelungsflächen 51 zurück, die am Werkzeugmaschinengerüst ausgebildet sind, wodurch die Verdrehung des Steuerringes 41 verhindert und gleichzeitig die Verriegelung zwischen dem Futtergehäuse 1 und des Steuerringes 41 gelöst wird. Die relative Verdrehung des Futtergehäuses 1 läßt sich durch ein langsames Verdrehen der Hauptspindel 25 verwirklichen, wo an der Werkzeugmaschine entsprechende Mittel (z.B. C-Achsen-Antrieb) vorhanden sind.

Im Spannfutter sind ingesamt drei Verriegelungsstifte 47 angeordnet, jedoch nur einer davon verriegelt das Futtergehäuse 1 und den Steuerring 41, die beiden anderen sind kürzer, massiv und können nicht nach hinten gezogen werden. Daher reicht es aus, bei der Betriebsart der automatischen Backenverstellung nur einen kleinen hydraulischen Servozylinder 74 einzusetzen, wie auf Fig. 16 zu sehen ist.

Im Falle von vollständig automatisierten Fertigungszellen kann ein Anspruch dahingehend auftreten, daß auch die Spannbacken automatisch ausgetauscht werden müssen. Die Anzahl der Austauschbacken kann hier ganz minimal sein, da die Veränderung des Durchmesserbereiches durch die automatische Backenverstellung gelöst wird, aber für einige Fälle können z.B. Weichbacken notwendig sein. In diesem Fall sind die Verriegelungsstifte 47 im Futtergehäuse an allen drei Stellen gleich, und es werden drei kleine Servozylinder 74 benötigt. Ein großer Vorteil im Verhältnis zu den früheren Lösungen ist jedoch, daß nur ein Backenlager mit kleiner Kapazität benötigt wird.

Ein Mittel, das zur schnellen Durchführung des Backenaustausches mit Hand geeignet ist, zeigen schematisch die Figuren 18 und 20.

An einem Spannfutterschlüssel 75 sind zwei Stifte 76, 77 mit paralleler Achse befestigt. Der Stift 76 paßt in eine Bohrung des Steuerringes 41. Es ist zweckmäßig, diese Bohrung dort vorzusehen, wo der Steuerring 41 stärker wird. Der Stift 77 paßt in eine äußere Nut des Verriegelungsstiftes 47. Wird der Handgriff 78 des Spannfutterschlüssels 75 mit der Hand gezogen, so verdreht sich der Spannfutterschlüssel 75 zuerst um den Stift 76 und zieht mit dem Stift 77 den Verriegelungsstift 47 heraus. Das Herausziehen des Verriegelungsstiftes 47 ist begrenzt, nach seinem Anschlag wird der Steuerring 41 durch die auf den Handgriff 78 wirkende Zugkraft verdreht. Dadurch kann man mit einer einzigen Bewegung den Kupplungskörper 70 nach hinten ziehen, und dadurch den schnellen Austausch der Backen mit Hand bei allen drei Backen durchführen. Bei dieser Lösung muß die Hauptspindel 25 nicht positioniert werden. Falls der hydraulische Servozylinder 74 unten oder an der Seite angebaut ist, ist der gesamte obere Bereich für die manuelle Betätigung frei. Dadurch, daß die Verriegelungsflächen 51 auch im Falle einer manuellen Betätigung die Inbetriebnahme der Hauptspindel 25 bei entkuppeltem Zustand der Zahnstangenverzahnung 3 verhindern, da der herausgezogene Verriegelungsstift 47 auf die Verriegelungsflächen 51 aufschlägt, wird die Betriebssicherheit erhöht und die Unfallgefahr vermindert.

Die oben erläuterten Maßnahmen können bei jeder Spannfutterausführung angewandt werden, bei der Steuerringe und ein Verriegelungsstift 47 verwendet werden, also bei jeder der in den Figuren 7 - 20 gezeigten Lösungen.
Auf dieser Grundlage kann eine solche Spannfutterfamilie gebildet werden, die anwendbar ist
- zum schnellen Backenaustausch durch Hand,
- zur automatischen Backenverstellung und
- zur automatischen Backenverstellung und zum automatischen Backenaustausch.

Diese Familie besitzt daher Varianten
- mit Ausgleich der Zentrifugalkraft und
- durchgängige (hohle) Ausführungen.

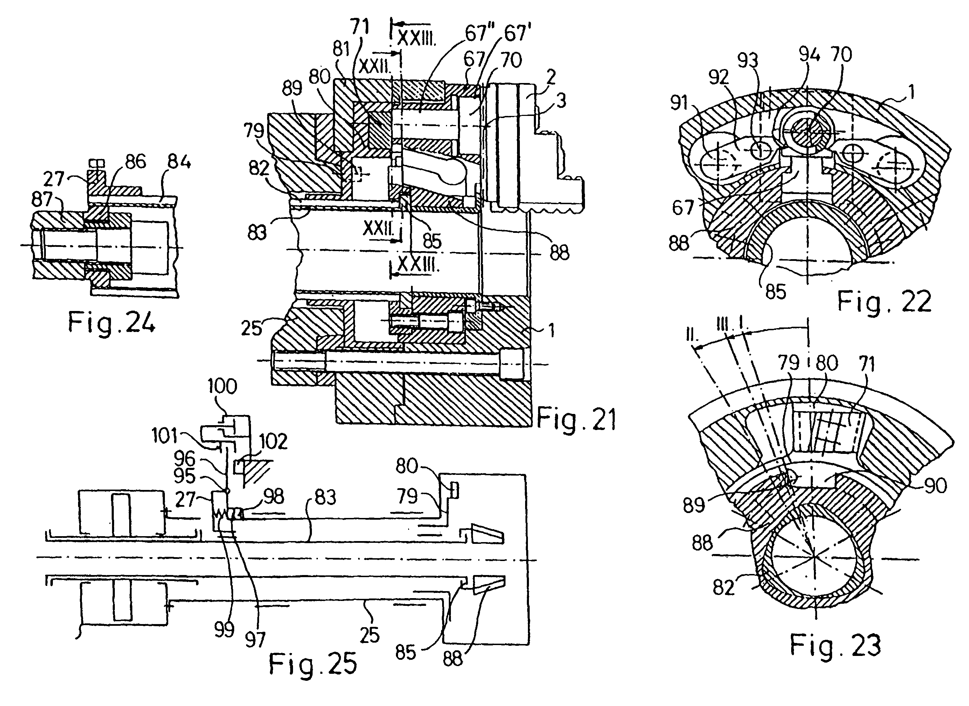

Eine weitere mögliche Ausführungsform des erfindungsgemäßen Spannfutters zeigen die Figuren 21 - 25. Die Elemente 2, 3, 67 und 70 stimmen mit den Elementen überein, die in den vorhergehenden Figuren 16 - 18 gezeigt wurden, die Figur 18 ist sogar für die in den Figuren 16 und 21 aufgezeichneten Spannfutter gültig. Die Steuerkörper 71 sind hier jedoch nicht an einem äußeren Steuerring befestigt, sondern an Segmenten 80 eines inneren Steuerringes 79, dessen Segmente in die ausgefrästen Hohlräume des hinteren Teils 81 des Futtergehäuses hineinreichen. Der Steuerring 79 ist durch momentübertragende Flächenteile 82 - z.B. Poligonflächen - mit den am äußeren Teil eines zentralen Ziehrohres 83 ausgebildeten momentübertragenden Flächenteilen verbunden. Am hinteren Teil des zentralen Ziehrohres 83 befindet sich auch ein momentübertragender Flächenteil 84, an den ein an der inneren Fläche des auch in Fig. 5 dargestellten Drehsternes 27 ausgebildeter momentübertragender Flächenteil anschließt. Der Verdrehmechanismus des Drehsternes 27 stimmt gemäß einer Variante mit der in den Figuren 5 und 6 gezeigten Lösung überein. Eine Neuheit ist es jedoch diesen Figuren gegenüber, daß die in den Figuren 21 - 24 gezeigte Lösung kein gesondertes Drehrohr und inneres Ziehrohr hat, sondern, das zentrale Ziehrohr 83 beide Aufgaben versieht:
- das Verdrehen des Steuerringes 79 wird über die am zentralen Ziehrohr 83 ausgebildeten momentübertragenden Flächenteile 84 ausgeführt;
- das zentrale Ziehrohr 83 mit an seinem vorderen und hinteren Teil ausgebildeten Flanschen 85 und 86 verbindet die Kolbenstange 87 des hinteren hydraulischen Hauptzylinders mit einem zentralen Ziehkopf 88. Die Flansche 85 und 86 sind sowohl mit dem zentralen Ziehkopf 88 als auch mit der Kolbenstange 87 verdrehbar verbunden.

Da in diesem Falle in der inneren Bohrung der Hauptspindel 25 nur ein einziges Rohr durchgeführt werden muß, kann im Inneren des Spannfutters die gleiche Durchgängigkeit erreicht werden, wie bei den bisher mit der größten Durchgängigkeit gebauten Spannfuttem. Eine weitere Verbesserung kann bei diesen Automatenspannfuttem die Anwendung von Anschlagstiften 89, die am Steuerring 79 befestigt sind, bedeuten. Dies spielt bei Normalbetrieb des Spannfutters - beim Einspannen der Werkstücke - keine Rolle, da diese bei dem Zurückziehen des zentralen Ziehkopfes 88 in Ausschnitte 90 einer am zentralen Ziehkopf 88 befestigten Scheibe einlaufen, und so der zentrale Ziehkopf 88 mit maximalen Hub ohne Behinderung nach hinten laufen kann, in die in der Fig. 23 angegebene Stellung. Wenn jedoch der Steuerring 79 bei der vorderen Stellung des Ziehkopfes 88 in geringem Maße verdreht wird, schlägt beim Zurückziehen des Ziehkopfes 88 dieser auf die Stirnflächen der Anschlagstifte 89 auf, wodurch der Ziehkopf 88 nur einen kürzeren Hub durchführen kann. Dieser verkürzte Hub entspricht einer radialen Bewegung der inneren Backen 67 um einen Zahn. So ist es nicht notwendig für die Verstellung der inneren Backen 67 um einen Zahn hintere Positionsschalter vorzusehen, die verstellt werden können, sondern mit festen inneren Anschlägen läßt sich eine genaue Teilung verwirklichen. Hieraus ergibt es sich, daß es zweckmäßig ist, das Verdrehen des Steuerringes 79 in drei Stellungen zu verwirklichen wie es, in Fig. 23 zu sehen ist.
I. Mit der großen Oberfläche des Steuerkörpers 71 wird der Kupplungskörper 70 unterstützt, während der Anschlagstift 89 den maximalen Rückwärtslauf des zentralen Ziehkopfes 88 nicht verhindert.
II. Der Steuerkörper 71 zieht den Kupplungskörper 70 zurück, und der Anschlagstift 89 gestattet dem zentralen Ziehkopf 88 nur einen solchen Rücklauf, daß die innere Backe 67 nur um einen Zahn in radialer Richtung bewegt wird.
III. Zwischen den Stellungen I. und II., bei denen der Steuerkörper 71 noch mit einer kleineren Oberfläche bei der ersten Stellung den Kupplungskörper 70 unterstützt, aber der Anschlagstift 89 begrenzt bereits die Bewegung des zentralen Ziehkopfes 88, damit die innere Backe 67 gerade eine Bewegung um einen Zahn macht.

Die Stellung I wird bei Normalbetrieb des Spannfutters - beim Einspannen des Werkstückes - angewandt. Der Steuerring 79 erreicht beim ersten Schritt der automatischen Backenverstellung nach innen die Stellung II, bei der Verstellung nach außen die Stellung III, und so verändert sich während der Verstellung immer die Winkelstellung des Steuerringes 79 zwischen Stellung II und III, wodurch die inneren Backen 67 sowohl beim Ein- als auch beim Auslaufen um je einen Zahn bewegt werden.

Eine weitere Möglichkeit zur Verwirklichung der Teilung auf einen genauen Anschlag ist, wenn zum maximalen Hub des zentralen Ziehkopfes zwei Zähne gehören. Bei dem größten Teil der Teilungen kann man bei der Bewegung des Ziehkopfes bis zum Anschlag genau die äußeren Stellungen anwenden. Wenn die Festspannung genau auf diese äußere Stellung fallen würde, könnte man in diesen wenigen Fällen auch die Teilung um einen Zahn anwenden, wobei dann der Ziehkopf in der mittleren Stellung durch einen hinten angebrachten Positionsschalter angehalten werden könnte.

Figur 22 zeigt bei der durchgängigen Variante der erfindungsgemäßen Spannfutter mit Backenverstellung ein Beispiel auch für den Ausgleich der Zentrifugalkraft.
Die Ausgleichsmassen 91 können weit in das Innere des Futtergehäuses hineinreichen und sind mit einem Hebel 92 verbunden. Der Hebel 92 kann sich um einen in das Futtergehäuse eingebauten Stift 93 bewegen und liegt mit seiner Fläche 94 auf der inneren Backe 67 auf. Zu jeder inneren Backe 67 gehören jeweils zwei Ausgleichsmassen 91, und wenn man auch die Hebelübertragung berücksichtigt, gleichen diese in bedeutendem Maße die auf die inneren Backen 67 und die Spannbacken 2 einwirkende Zentrifugalkraft aus.

Eine weitere mögliche Ausführungsform des erfindungsgemäßen Spannfutters zeigt die Figur 25. Der vordere Teil des Spannfutters stimmt mit der in der Fig. 21 angegebenen Lösung überein, daher ist dies in der Fig. 25 nur skizzenhaft angegeben. Das Verdrehen des Steuerringes 80 wird hier ebenfalls durch einen sich in einer Bohrung der Hauptspindel 25 befindliches Ziehrohr 83 verwirklicht. Ein Hebel 96 ist über ein Gelenk 95 mit dem Drehstern 27 verbunden. Die Klauen 97, die sich am Hebel 96 ausgebildet sind, greifen in Klauen 98, die an der Hauptspindel 25 befestigt sind, ein. Dieser Eingriff wird im Normalbetrieb durch eine Feder 99 bewirkt, wodurch der Steuerring 79 mit hoher Sicherheit gegen Verdrehung gegenüber der Hauptspindel verriegelt ist. Während der automatischen Backenverstellung wird die relative Verdrehung des Steuerringes 79 gegenüber der Hauptspindel durch Verdrehung der Hauptspindel 25 gewährleistet. In diesem Fall zieht ein hydraulischer Hilfszylinder 100 den Hebel 96 mit Hilfe von Backen 101 nach hinten, so daß dieser zwischen feststehende Verriegelungsflächen 102 eingreift, während sich die Klauen 97, 98 entkuppeln. Hier übernimmt also der Hebel 96 die Rolle des Verriegelungsstiftes 47 aus den vorhergehenden Lösungen und das sichere doppelte Verriegelungssystem wird im hinteren Teil der Hauptspindel 25 verwirklicht.

Ein Vorteil der erfindungsgemäßen Vorrichtungen besteht darin, daß die Einstellungen des Durchmesserbereiches ohne menschlichen Eingriff, durch die automatische Verstellung der Backen erfolgen können. Es ist ein weiterer Vorteil, daß neben der automatischen Backenverstellung, die Möglichkeit besteht, die Backen schnell mit Hand zu verstellen, und außerdem ihre Auswechselung mit Hand oder automatisch auch möglich ist, wodurch eine Spannfutterfamilie gebildet wird, die von einfachen Werkbänken über Bearbeitungszentren bis zu automatischen Fertigungszellen auf jedem Automatisierungsniveau anwendbar sind.

Ein weiterer Vorteil ist es, daß bei den Spannfuttern solche Konstruktionslösungen angewendet werden können, bei denen die auf die Spannbacken einwirkende Zentrifugalkraft teilweise oder gänzlich ausgeglichen werden kann.

Vorteilhaft sind auch diejenigen Konstruktionslösungen, bei denen die die Zentrifugalkraft ausgleichende Masse mit der inneren Backe einen Körper bildet, so daß die ausgleichende Kraft ohne Übertragung direkt auf die innere Backe wirken kann.

Bei dieser letzteren Variante ist es auch von Vorteil, daß lange innere Führungen angewandt werden können.

Von Vorteil sind auch jene, die Zentrifugalkraft ausgleichenden Vorrichtungen, bei denen die die Zentrifugalkraft ausgleichende Masse mittels einer Hebelübertragung, dessen Achse parallel zur Achse des Spannfutters liegt, auf die an den inneren Backen ausgebildeten Nuten einwirkt.

Bei einem Teil der erfindungsgemäße Vorrichtungen (Figuren 1, 2, 3, 4, 5, 6, 21, 22, 23 und 24) ist es auch eine vorteilhafte Eigenschaft, daß die Hauptspindel bei jeglicher Winkelstellung bewegt werden kann, das heißt, die Hauptspindel muß nicht genau positioniert werden.

Einen Vorteil bedeutet es auch weiterhin, daß zur automatischen Backenverstellung bereits Konstruktionselemente verwendet werden können, die an der Maschine bereits vorhanden sind. Dazu gehört die Anwendung des C-Achses-Antriebs der Hauptspindel in den Figuren 7- 18 zur Verdrehung des Steuerringes, weiterhin die Anwendung der Bewegungsmechanismen des zentralen Ziehkopfes bei der Teilungsbewegung der inneren Backen. Vorteilhaft sind weiterhin solche Konstruktionslösungen, bei denen mit einem Konstruktionselement mehrere Aufgaben gelöst werden können. So z.B. der Verriegelungsstift 47, der eine doppelte Sicherheitsfunktion erfüllt: während des Normalbetriebes des Spannfutters verhindert er mit hoher Sicherheit das Verdrehen des Steuerringes, bei der Backenverstellung jedoch verhindert er das Drehen der Hauptspindel mit hoher Sicherheit. Eine solche doppelte Rolle übernimmt z.B. auch das zentrale Ziehrohr 83, da sie in der Bohrung der Hauptspindel 25 nicht nur die Zugkraft in den zentralen Ziehkopf überträgt, sondern über die momentübertragenden Flächenteile auch das zum Drehen des Steuerringes notwendige Drehmoment. So verringert sich durch das Entfallen eines Rohres, im Verhältnis zu den bisherigen Lösungen, die Durchgängigkeit der Hauptspindel nicht.

Einen weiteren Vorteil ergibt sich auch daraus, daß in den meisten Fällen die Zahnteilungen durch Bewegung an starre Anschläge gewährleistet werden können, wodurch die Betriebssicherheit in hohem Maße steigt.

## Patentansprüche

1. Spannfutter mit im Futtergehäuse (1) geführten Spannbacken (2), denen über Zahnstangenverzahnungen (3) direkt oder indirekt verkuppelbare bzw. entkuppelbare innere Backen (4, 38, 67) zugeordnet sind, denen mit Zahnstangenverzahnungen (3) versehene, axial und radial geführte Kupplungskörper (4' 55, 70) angeschlossen sind, außerdem die inneren Backen (4, 38, 67) über einen Keilmechanismus mit einem zentralen Ziehkopf (12, 88) verbunden sind, der über eine in einer zentralen Bohrung der Hauptspindel (25) geführten Stange oder Hohlwelle (13) mit dem Kolben eines am hinteren Teil der Hauptspindel (25) angeordneten hydraulischen Zylinders (28) verbunden ist, wobei der sich an den zentralen Ziehkopf (12, 88) anschließende Keilmechanismus so ausgebildet ist, daß im zentralen Ziehkopf (12, 88) drei Keilelemente befestigt oder angeordnet sind, außerdem das Spannfutter die Zentrifugalkraft ausgleichende Massen aufweist, **dadurch gekennzeichnet, daß** die Kupplungskorper (4', 55, 70) der inneren Backen (4, 38, 67) mit einer doppelten Verriegelungskonstruktion versehen sind, wobei das eine Element der doppelten Verriegelungskonstruktion der Kupplungskörper (4', 55, 70) ein auf der äußeren oder inneren Fläche des Futtergehäuses (1) verdrehbar geführter Steuerring (18, 41, 79) ist, auf dem Steuerelemente in der Form von Steuerrollen (44) oder von Steuerkeile und Stützflächen aufweisenden Steuerkörpern (60, 61; 71) zur Verhinderung oder Herstellung einer Verbindung mit den Spannbacken (2) angebracht sind, während das andere Element ein Verriegelungsmittel zur Verhinderung der Verdrehung des Steuerringes (18, 41, 79) gegenüber dem Futtergehäuse (1) ist, der zwischen dem Steuerring (18, 41, 79) und dem Futtergehäuse (1) bzw. dem Steuerring (18, 41, 79) und mit dem Futtergehäuse (1) fest verbundenen Verriegelungsflächen angeordnet ist.

2. Spannfutter nach Anspruch 1, **dadurch gekennzeichnet, daß** die inneren Backen (4, 38) mit den die Zentrifugalkraft ausgleichenden Massen (6) zusammengebaut sind, wobei diese die auf die inneren Backen (4, 38) und die Spannbacken (2) einwirkende Zentrifugalkraft ausgleichenden Massen (6) aus einem Stück mit den inneren Backen (4, 38) gebildet sind, darüber hinaus weisen die inneren Backen (4, 38) an ihren zwei entgegengesetzten Seiten bezüglich der Drehachse des Spannfutters zwei Kopfteile auf, von denen der schmälere Kopfteil entweder als ein mit der Zahnstangenverzahnung (3) direkt versehener Kupplungskörper (4') ausgebildet-ist, oder in seinem Inneren ein mit einer Zahnstangenverzahnung (3) versehener Kupplungskörper (55) axial geführt ist, während im an der entgegengesetzten Seite liegenden, eine ausgleichende Masse (6) bildenden Kopfteil eine mit der Drehachse einen Winkel einschließende Bohrung (10) für je ein Keilelement des Keilmechanismus ausgebildet ist.

3. Spannfutter nach Anspruch 2, **dadurch gekennzeichnet, daß** in den Bohrungen (10) des breiteren Kopfteiles der inneren Backen (4, 38) mit der Drehachse einen Winkel einschließende Zapfen (11) zylinderförmigen Querschnitts als Keilelemente des Keilmechanismus geführt sind, wobei das Ende der Zapfen (11) am zentralen Ziehkopf (12) befestigt ist, während die Zapfen (11) an ihrem anderen Ende mit ihnen einen Körper bildende, aber mit der Drehachse parallele Zapfenteile (15) aufweisen, die in Buchsen (14) geführt sind, die in die an den den Spannbacken (2) gegenüberliegenden Seiten des Futtergehäuses (1) ausgebildeten Bohrungen eingebaut sind.

4. Spannfutter nach Anspruch 1, **dadurch gekennzeichnet, daß** die axial und radial geführten Kupplungskörper (70) der inneren Backen (67) zwei koaxiale Zylinderflächen mit unterschiedlichem Durchmesser besitzen, wobei die Zylinderfläche mit dem größeren Durchmesser in der Bohrung (67') des vorderen breiten Teiles der inneren Backen (67), während die Zylinderfläche mit dem kleineren Durchmesser in der Bohrung (67") des hinteren schmäleren Teiles der inneren Backen (67) geführt ist, außerdem die die Zentrifugalkraft ausgleichenden Massen (91) über einen Hebel (92) mit den an den Seiten der inneren Backen (67) ausgebildeten Nuten verbunden sind, wobei die Drehachsen der Hebel (92) parallel zur Drehachse der Hauptspindel (25) liegen.

5. Spannfutter nach einem der Ansprüche 1 bis 4, **dadurch gekennzeichnet, daß** das Verriegelungsmittel zwischen dem Steuerring (41) und dem Futtergehäuse (1) aus einem im Steuerring axial geführten Verriegelungsstift (47) besteht, dessen hinterer Stiftteil (48) in entriegeltem Zustand des Futtergehäuses (1) und des Steuerringes (41) zwischen an dem Werkzeugmaschinengerüst fest angebrachten Verriegelungsflächen (51) angeordnet ist.

6. Spannfutter nach Anspruch 5, **dadurch gekennzeichnet, daß** die Mantelfläche des Steuerringes (41) mit einer Bohrung versehen ist, in die der eine Stift (76) eines handbetätigten Spannfutterschlüssels (75) eingesteckt werden kann, während der andere Stift (77) des Spannfutterschlüssels (75) mit einem zur axialen Bewegung geeigneten Oberflächenteil des Verriegelungsstiftes (47) in Verbindung steht.

7. Spannfutter nach einem der Ansprüche 1 bis 6, **dadurch gekennzeichnet, daß** der Steuerring (41) radial in die Ausschnitte (42) des Futtergehäuses (1) eingreifende Segmente aufweist, die zwischen der inneren Stirnfläche der Ausschnitte (42) des Futtergehäuses (1) und der Stirnfläche einer Aufnahmescheibe (49) verdrehbar eingesetzt sind und auf diese Segmente (43) Steuerrollen, Steuerkeile oder Stützriegel befestigt sind, die zwischen die Aufnahmescheibe (49) und die axial geführten Kupplungskörper (4', 55, 70) hineingreifen.

8. Spannfutter nach einem der Ansprüche 1 bis 3, **dadurch gekennzeichnet, daß** das eine Element der doppelten Verriegelungskonstruktion aus an einem relativ zum Futtergehäuse (1) verdrehbar geführten Steuerring (18, 79) ausgebildeten Steuerflächen (19, 21) besteht, die durch Übertragungselemente oder direkt mit den axial geführten Kupplungskörpern (4', 55) in Verbindung stehen, während das andere Element ein auf dem hinteren Teil der Hauptspindel (25) angebrachter Verdrehmechanismus ist, der aus einem mit dem Steuerring (18) über eine einem in der Bohrung der Hauptspindel (25) geführten Hohlwelle (26) verbundenen Drehstem (27) besteht, dessen Flügel in den Durchbrüchen des zwischen der Hauptspindel (25) und dem hydraulischen Hauptzylinder (28) angeordneten Zwischenstückes (29) geführt sind, wobei an den Enden seiner Flügel Rollen (30) angebracht sind, die in die zur Drehachse eines Ringes (31) parallelen Kurvenbahnabschnitte (32') eingreifen, wobei diese Kurvenbahnabschnitte (32') sich in spiralförmigen Kurvenbahnen (32) fortsetzen, außerdem an dem Zwischenstück (29) weitere Rollen (33) angebracht sind, die in die parallel zur Drehachse liegenden Kurvenbahnen (34) des Ringes (31) eingreifen, außerdem in eine zur Drehachse senkrechten Nut des Ringes (31) eine Schubgabel (36) ein greift, die mit dem Kolben eines hydraulischen Hilfszylinders (37) verbunden ist.

9. Spannfutter nach einem der Ansprüche 1 bzw. 4 bis 7, **dadurch gekennzeichnet, daß** die radialen Führungselemente (56, 57 und 58) der inneren Backen (4) an der inneren Stirnfläche des Futtergehäuses (1) angebracht sind.

10. Spannfutter nach Anspruch 1, **dadurch gekennzeichnet, daß** das eine Element seiner doppelten Verriegerungskonstruktion ein, an der inneren Fläche des Futtergehäuses (1) verdrehbar geführter Steuerring (79) ist, der mit verriegelnden Steuerkörper (71) versehen ist, die mit den axial geführten Kupplungskörpern (70) direkt oder indirekt verbunden sind, während beim anderen Element der doppelten Verriegerungskonstruktion in die Bohrung der Hauptspindel (25) nur ein einziges zentrales Ziehrohr (83) eingebaut ist, auf dessen äußeren Flächen sowohl vom als auch hinten zur Momentübertragung geeignete Flächenteile (82), z. B. Poligonflächen ausgebildet sind, welche Flächenteile teilweise mit dem im Futtergehäuse geführten Steuerring (79) bzw. teilweise mit den momentübertragenden Flächenteilen (84) des hinteren Drehsterns (27) in Verbindung stehen, weiterhin sind an den vorderen und hinteren Stirnflächen dieses zentralen Ziehrohres (83) solche Flansche (85, 86) ausgebildet, die mit dem zentralen Ziehkopf (88) und der Kolbenstange (87) des hinteren hydraulischen Hauptzylinders (28) verdrehbar zusammengebaut sind.

11. Spannfutter nach Anspruch 10., **dadurch gekennzeichnet, daß** das zweite Element der doppelten Verriegelungskonstruktion ein Hebel (96) ist, der durch ein Gelenk (95) mit dem Drehstern (27) verbunden ist, der sich im hinteren Teil der Hauptspindel (25) befindet und in bezug auf das zentrale Ziehrohr (83) gegen Verdrehung gesichert ist, wobei die Flächenteile des Hebels (90) in der einen Schaltstellung mit der Hauptspindel (25), in der anderen Schaltstellung jedoch mit feststehenden Verriegelungsflächen (102) in Verbindung stehen.

12. Spannfutter nach Anspruch 10. und 11., **dadurch gekennzeichnet, daß** die aus der Stirnfläche des Steuerringes (79) herausragenden Oberflächenteile, z.B. die Flächenteile der Anschlagstifte (89), bei Normalbetrieb des Spannfutters in die Ausschnitte (90) des zentralen Ziehkopfes (88) eingreifen, jedoch bei den beiden verdrehten Stellungen des Steuerringes (79) (bei der Betriebsart der Backenverstellung), diese Flächenteile bei der Rückwärtsbewegung des zentralen Ziehkopfes (88) auf die Stirnfläche des zentralen Ziehkopfes (88) aufschlagen.

13. Spannfutter nach einem der Ansprüche 1 bis 12., **dadurch gekennzeichnet, daß** zu der Bewegung des zentralen Ziehkopfes (12, 65, 88) mit maximalem Hub eine Bewegung der inneren Backen (4, 38, 67) um zwei Zähne gehört.

## Claims

1. A chuck comprising chuck jaws (2) guided in a chuck body (1), and inner jaws (4, 38, 67) associated to said chuck jaws (2), wherein said inner jaws (4, 38, 67) can be engaged and disengaged with said chuck jaws (2) directly or indirectly via rack gears (3), and are coupled with connector means (4', 55, 70), which are provided with rack gears (3) and guided axially and radially, the inner jaws (4, 38, 67) are further connected through a wedge-type mechanism to a central drawing head (12, 88) which, in turn, is connected to a piston of a hydraulic cylinder (28) arranged on the rearward side of a main spindle (25) via a rod or axle tube (13) guided through a central hole of said main spindle (25), wherein said wedge-type mechanism connected to the central drawing head (12, 88) is formed in such a way that three wedges are fastened or arranged in said central drawing head (12, 88) and the chuck further comprises counterweights (6) adapted for compensation of the centrifugal force, **characterised in that** the connector means (4', 55, 70) of said inner jaws (4, 38, 67) are provided with a double locking device, a first element of which is a control ring (18, 41, 79) turnably guided on the internal or external surface of said chuck body (1), and a second element of which is a locking mechanism preventing said control ring (18, 41, 79) from turning relative to the chuck body (1), wherein said control ring (18, 41, 79) is provided with control elements in the form of control rollers (44) or in the form of control members (60, 61; 71) having control wedges and supporting lock surfaces for allowing or preventing from connection to said chuck jaws (2), and wherein said locking mechanism is arranged between said control ring (18, 41, 79) and said chuck body (1), or between said control ring (18, 41, 79) and locking surface regions rigidly connected to the chuck body (1).

2. The chuck as claimed in claim 1, **characterised in that** the inner jaws (4, 38) and the counterweights (6) for compensation of the centrifugal force are built together, wherein said inner jaws (4, 38) and said counterweights (6) are formed as a single integrated unit, wherein the inner jaws (4, 38) comprise two heads located on opposite sides of the axis of rotation of the chuck, the narrower one of which is either in the form of a connector means (4') provided directly with a rack gear (3) or in its interior a connector means (55) provided with a rack gear (3) is guided axially, whereas the wider one of said heads, which forms a counterweight (6) on the opposite side, comprises a hole (10) for a wedge element of said wedge-type mechanism, the axis of said hole (10) defines an acute angle with respect to the axis of rotation of the chuck.

3. The chuck as claimed in claim 2, **characterised in that** cylindrical studs (11), as elements of said wedge-type mechanism, are guided in the holes (10) of said wider heads of said inner jaws (4, 38) in an inclined direction with respect to the axis of rotation of the chuck, wherein one end of each stud (11) is secured to said central drawing head (12), and the other end of each stud (11) has a stud segment (15) having an axis parallel to the axis of rotation of the chuck and forming a single integrated unit with the stud (11), wherein said stud segment (15) is guided in a bushing (14) accommodated in a hole arranged on the opposite side of the chuck body (1) with respect to the corresponding chuck jaw (2).

4. The chuck as claimed in claim 1, **characterised in that** said axially and radially guided connector means (70) of the inner jaws (67) have two cylindrical surfaces with different diameter but with a common axis, wherein the cylindrical surface with larger diameter is guided in a hole (67') bored into the forward wider part of the inner jaws (67), whereas the smaller cylindrical surface is guided in a hole (67") bored into the narrower rearward part of said inner jaws (67), and said counterweights (91) for compensation of the centrifugal force are connected through arms (92) to grooves formed on the side wall of the inner jaws (67), wherein the longitudinal axis of said arms (92) extend parallel to the axis of rotation of the main spindle (25).

5. The chuck as claimed in claims 1 to 4, **characterised in that** said locking mechanism between said control ring (41) and said chuck body (1) is formed as a locking stud (47) guided axially in the control ring (41), said locking stud (47) including a rearward segment (48) arranged between locking surfaces (51) rigidly secured to the machine frame when the chuck body (1) and the control ring (41) are disengaged.

6. The chuck as claimed in claim 5, **characterised in that** said control ring (41) comprises a hole bored into its lateral surface, wherein a first stud (76) of a manually operated chuck wedge (75) can be inserted into said hole, and a second stud (77) of said chuck wedge (75) is connected to surface regions adapted for axial movement of said locking stud (47).

7. The chuck as claimed in claims 1 to 6, **characterised in that** the control ring (41) have segments (43) extending radially into cutoffs (42) of the chuck body (1), wherein said segments (43) are turnably inserted between the internal front face of said cutoffs (42) of the chuck body (1) and the front face of an adapter disc (49), and control rollers, control wedges or supporting locks extending into a space between said adapter disc (49) and said axially guided connector means (4', 55, 70) are secured to said segments (43).

8. The chuck as claimed in claims 1 to 3, **characterised in that** a first element of the double locking device consists of a control ring (18, 79) turnably guided relative to the chuck body (1) and provided with control surfaces (19, 21), wherein said control surfaces (19, 21) are connected, either indirectly, through transmitting elements or directly to the axially guided connector means (4', 55), while a second element of the double locking device is a locking mechanism arranged on the back side of the main spindle (25), wherein said locking mechanism comprises a rotating star (27) connected to the control ring (18) via an axle tube (26) led through a hole of the main spindle (25), wherein shanks of said rotating star (27) are led out through apertures of an inset (29) between the main spindle (25) and the main hydraulic cylinder (28), wherein rollers (30) secured to the ends of the shanks of said rotating star (27) are engaged to sections (32') of a guide-way parallel to the axis of rotation of a ring (31), wherein said sections (32') of said guide-way are followed by helical guide-ways (32), and additional rollers (33) are secured onto said inset (29), said rollers (33) being engaged to guide-ways (34) of said ring (31), wherein the longitudinal axis of said guide-ways (34) are parallel to the axis of rotation of the chuck, furthermore a straddle fork (36) is connected to a groove of the ring (31) extending perpendicularly to the axis of rotation of the chuck, and a piston of an auxiliary hydraulic cylinder (37) is connected to said straddle fork (36).

9. The chuck as claimed in claims 4 to 7, **characterised in that** the inner jaws (4) have radial guiding elements (56, 57 and 58) which are secured to the internal front face of the chuck body (1).

10. The chuck as claimed in claim 1, **characterised in that** a first element of the double locking device is a control ring (79) turnably guided on the internal surface of the chuck body (1), wherein said control ring (79) is provided with locking control members (71), which are connected, either directly or indirectly to axially guided connector means (70), while a second element of the double locking device is provided with a single central drawing pipe (83) built in a hole of the main spindle(25), wherein surface regions (82) for transmission of torque, such as polygonal surfaces, are formed, on both front and back side, on the external surface of said central drawing pipe (83), wherein said surface regions (82) are connected partly to the control ring (79) guided in the chuck body (1) and partly to torque-transmitting surfaces of (84) of the rearward rotating star (27), and furthermore flanges (85, 86) are formed on the front and back face of said central drawing pipe (83) which are turnably assembled with the central drawing head (88) and the piston-rod (87) of the rearward main hydraulic cylinder (28).

11. The chuck as claimed in claim 10, **characterised in that** the second element of the double locking device is an arm (96) connected through a hinge (95) to the rotating star (27) on the rearward side of the main spindle (25), wherein the rotating star (27) is prevented from turning relative to the central drawing pipe (83), and surface regions of said arm (96) are connected to the main spindle (25) at a first switching position, whereas said surface regions are connected to fixed locking surface regions (102) at a second switching position.

12. The chuck as claimed in claims 10 and 11, **characterised in that** the surface regions, such as surface regions of detent pins (89), extending from the front face of the control ring (79) are connected to cutoffs (90) of the central drawing head (88) at normal operation of the chuck, whereas at the two turned positions of the control ring (79), i.e. at jaw adjustment operation, said surface regions butt on the front face of the central drawing head (88) when the central drawing head (88) is pulled back.

13. The chuck as claimed in claim 1 to 12, **characterised in that** motion of the central drawing head (12, 65, 88) with a maximum stroke is performed by moving the inner jaws (4, 38, 67) by two tooth pitches.

## Revendications

1. Mandrin de serrage comportant des mâchoires de serrage (2), qui sont guidés dans le boîtier (1) du mandrin et auxquelles sont associés des mâchoires intérieures (4, 38, 67), qui peuvent être couplées ou découplées directement ou indirectement par l'intermédiaire de dentures de crémaillères (3), et auxquelles sont raccordés des corps de couplage (4', 55, 70) qui sont pourvus de dentures de crémaillère (3) et sont guidés axialement et radialement, les mâchoires intérieures (4, 38, 67) étant en outre reliées par l'intermédiaire d'un mécanisme à coins à une tête centrale de tirage (12, 88), qui est reliée par l'intermédiaire d'une barre ou d'un arbre creux (13), guidé dans un perçage central de la broche principale (25), au piston d'un vérin hydraulique (28) disposé sur la partie arrière de la broche principale (25), le mécanisme à coins, qui se raccorde à la tête centrale de tirage (12, 88) étant agencé de telle sorte que trois éléments formant coins sont fixés ou disposés dans la tête centrale de tirage (12, 88), le mandrin de serrage comportant en outre des masses compensant la force centrifuge, **caractérisé en ce que** les corps de couplage (4', 55, 70) des mâchoires intérieures (4, 38, 67) sont pourvus d'une double structure de verrouillage, et qu'un élément de la double structure de verrouillage des corps de couplage (4', 55, 70) est une bague de commande (18, 41, 79) guidée de manière à pouvoir tourner sur la surface extérieure et la surface intérieure du boîtier (1) du mandrin et sur lequel des éléments de commande sous la forme de galets de commande (44) ou de corps de commande (60, 61; 71), possédant des coins de commande et des surfaces d'appui sont montés pour empêcher ou établir une liaison avec les mâchoires de serrage (2), tandis que l'autre élément est un élément de verrouillage pour empêcher la rotation de la bague de commande (18, 41, 79) par rapport au boîtier (1) du mandrin et qui est disposé entre la bague de commande (18, 41, 79) et le boîtier (1) du mandrin ou entre la bague de commande (18, 41, 79) et des surfaces de verrouillage reliées de façon fixe au boîtier (1) du mandrin.

2. Mandrin de serrage selon la revendication 1, **caractérisé en ce que** les mâchoires intérieures (4, 38) sont réunies aux masses (6) qui compensent la force centrifuge, et que ces masses (6), qui compensent la force centrifuge agissant sur les masses (4, 38) et sur les mâchoires de serrage (2), sont formées d'un seul tenant avec les mâchoires intérieures (4, 38), et qu'en outre les mâchoires intérieures (4, 38) possèdent, sur leur deux côtés opposés par rapport à l'axe de rotation du mandrin de serrage, deux parties de tête, parmi lesquelles la partie de tête la plus petite est agencée sous la forme d'un corps de couplage (4') équipé directement de la denture de crémaillère (3) ou qu'un corps de couplage (55) pourvu d'une denture de crémaillère (3) est guidé axialement à l'intérieur de cette partie de tête, alors que dans la partie de tête, qui est située sur le côté opposée et forme une masse de compensation (6), un perçage (10), qui fait un angle avec l'axe de rotation, est aménagé pour respectivement un élément formant coin du mécanisme à coins.

3. Mandrin de serrage selon la revendication 2, **caractérisé en ce que** des embouts (11), qui font un angle par rapport à l'axe de rotation et possèdent une section transversale de forme circulaire, sont guidés en tant qu'éléments formant coins du mécanisme à coins dans les perçages (10) de la partie de tête plus large des mâchoires intérieures (4, 38), l'extrémité des embouts (11) étant fixée sur la tête de tirage centrale (12), tandis que les embouts (11) possèdent, au niveau de leur autre extrémité, des éléments d'embouts (15), qui forment un corps, mais sont parallèles à l'axe de rotation et sont guidés dans des manchons (14), qui sont montés dans les perçages, qui sont formés sur les côtés du boîtier (1) du mandrin, qui sont situés à l'opposé des mâchoires de serrage (2).

4. Mandrin de serrage selon la revendication 1, **caractérisé en ce que** les corps de couplage (70), qui sont guidés axialement et radialement, des mâchoires intérieures (67) possèdent deux surfaces cylindriques coaxiales ayant des diamètres différents, la surface cylindrique possédant le diamètre le plus grand étant guidée dans le perçage (67') de la partie avant large de la mâchoire intérieure (67), tandis que la surface cylindrique possédant le diamètre plus petit est guidée dans le perçage (67") de la paroi arrière plus étroite de la mâchoire intérieure (67), et en outre les masses (91), qui compensent la force centrifuge, sont reliées par l'intermédiaire d'un levier (92), aux rainures formées dans les faces latérales des mâchoires intérieures (67), les axes de rotation des leviers (92) étant parallèles à l'axe de rotation de la broche principale.

5. Mandrin de serrage selon l'une des revendications 1 à 4, **caractérisé en ce que** le moyen de verrouillage entre la bague de commande (41) et le boîtier (1) du mandrin est constitué par une tige de verrouillage (47) qui est guidée axialement dans la bague de commande et dont la partie arrière (48) est disposée entre des surfaces de verrouillage (51) montées fixes sur le bâti de la machine outil, lorsque le boîtier (1) du mandrin et la bague de commande (41) sont dans l'état déverrouillé.

6. Mandrin de serrage selon la revendication 5, **caractérisé en ce que** la surface enveloppe de la bague de commande (41) comporte un perçage, dans lequel peut être enfichée une tige (76) d'une clé (64) du mandrin de serrage, qui peut être actionnée manuellement, tandis que l'autre tige (77) de la clé (75) du mandrin de serrage est reliée à un élément de surface, convenant pour le déplacement axial, de la tige de verrouillage (44).

7. Mandrin de serrage selon l'une des revendications 1 à 6, **caractérisé en ce que** la bague de commande (41) comporte des segments, qui pénètrent radialement dans les découpes (42) du boîtier (1) du mandrin et qui sont insérés de manière à pouvoir tourner entre la surface frontale intérieure des découpes (42) du boîtier (1) du mandrin et la surface frontale du disque de réception (49) et que sur ces segments (43) sont fixés des galets de commande, des coins de commande ou des barres d'appui, qui pénètrent entre le disque de réception (49) et les corps de couplage (4', 55, 70) guidés axialement.

8. Mandrin de serrage selon l'une des revendications 1 à 3, **caractérisé en ce qu'**un élément de la double structure de verrouillage est constitué par des surfaces de commande (19, 21), qui sont formées sur une bague de commande (18, 79) guidée de manière à pouvoir tourner par rapport au boîtier (1) du mandrin et qui sont reliées par l'intermédiaire d'éléments de transmission directement aux corps de couplage (4', 55) guidés axialement, tandis que l'autre élément est un mécanisme de rotation monté sur la partie arrière de la broche principale (25) et qui est constitué par une étoile rotative (27) qui est reliée à la bague de commande (18) par l'intermédiaire d'un arbre creux (26) guidé dans le perçage de la broche principale (25), et dont les branches sont guidées dans les passages traversants de l'élément intermédiaire (29) disposé entre la broche principale (25) et le vérin hydraulique principal (28), et que sur les extrémités de des branches de l'étoile sont montés des galets (30), qui s'engagent dans les sections de pistes courbes (32) parallèles à l'axe de rotation d'un bague (31), et que ces sections de pistes courbes (32) se prolongent par des pistes courbes de forme spiralée (32), et qu'en outre sur l'élément intermédiaire (59) sont montés d'autres galets (33), qui s'engagent dans les pistes courbes (34) de la bague (32), qui sont parallèles à l'axe de rotation, et en outre dans une rainure de bague (31), qui est perpendiculaire à l'axe de rotation, s'engage une fourche de poussée (36), qui est reliée au piston d'un vérin hydraulique auxiliaire (35).

9. Mandrin de serrage selon l'une des revendications 1 ou 4 à 7, **caractérisé en ce que** les éléments de guidage radiaux (56, 57 et 58) des mâchoires intérieures (4) sont montés sur la surface frontale intérieure du boîtier (1) du mandrin.

10. Mandrin de serrage selon la revendication 1, **caractérisé en ce qu'**un élément de la structure double de verrouillage du mandrin comporte, une bague de commande (79), qui est guidée de manière à pouvoir tourner sur la surface intérieure du boîtier (1) du mandrin et qui est équipée de corps de commande (71) réalisant le verrouillage, qui sont reliés directement ou indirectement aux corps de couplage (70) guidés axialement, tandis que dans le cas de l'autre élément de la double structure de verrouillage, un seul tube de tirage central (83) est monté dans le perçage de la broche principale (25), tube de tirage sur les surfaces extérieures duquel sont formées des éléments de surface (82), par exemple des surfaces polygonales, qui sont appropriés aussi bien en avant qu'en arrière pour la transmission d'un couple, lesquels éléments de surface sont reliés en partie à la bague de commande (79) guidée dans le boîtier du mandrin ou en partie aux éléments (84), qui transmettent un couple, de l'étoile rotative arrière (24), et en outre sur des surfaces frontale avant et arrière de ce tube central de tirage (83) sont formées des brides (85, 86), qui sont assemblées de manière à pouvoir pivoter à la tête centrale de tirage (88) de la tige de piston (87) du vérin hydraulique arrière principal (28).

11. Mandrin de serrage selon la revendication 10, **caractérisé en ce que** le deuxième élément de la double structure de verrouillage est un levier (96), qui est relié par une articulation (95) à l'étoile rotative (27) qui est située dans la partie arrière de la broche principale (25) et est bloquée contre toute rotation par rapport au tube central de tirage (83), les éléments de surface du levier (90) étant reliés, dans une position de commutation, à la broche principale (25) mais, dans l'autre position de commutation, à des surfaces de verrouillage fixe (102).

12. Mandrin de serrage selon les revendications 10 et 11, **caractérisé en ce que** les éléments de surface, qui font saillie hors de la surface frontale de la bague de commande (79) par exemple les éléments de surface des tiges de butée (89), s'engagent, lors du fonctionnement normal du mandrin de serrage, dans les découpes (90) de la tête centrale de tirage (88), mais, dans les deux autres positions pivotées de la bague de commande (79) dans le cas du type de fonctionnement de réglage des mâchoires, repoussent ces éléments de surface contre la face frontale de la tête centrale de tirage (88) lors du mouvement de recul de la tête centrale de tirage (88).

13. Mandrin de serrage selon l'une des revendications 1 à 12, **caractérisé en ce qu'**un déplacement des mâchoires intérieures (4, 38, 67) sur deux dents est associé au déplacement de la tête centrale de tirage (12, 65, 88) avec la course maximale.
